(19) Europäisches Patentamt
European Patent Office
Office européen des brevets

(11) EP 3 673 972 A1

(12) EUROPEAN PATENT APPLICATION

(43) Date of publication:
**01.07.2020 Bulletin 2020/27**

(51) Int Cl.:
***B01D 53/14** (2006.01)* ***B01D 53/73** (2006.01)*
***B01D 53/96** (2006.01)*

(21) Application number: **18248264.6**

(22) Date of filing: **28.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VITO NV**
**2400 Mol (BE)**

(72) Inventors:
- **BOUWMAN, Lambertus**
**2400 Mol (BE)**
- **PANT, Deepak**
**2400 Mol (BE)**
- **BULUT, Metin**
**2400 Mol (BE)**
- **VANBROEKHOVEN, Karolien**
**2400 Mol (BE)**

(74) Representative: **Pronovem**
**Office Van Malderen**
**Avenue Josse Goffin 158**
**1082 Bruxelles (BE)**

# (54) ALKALI-MEDIATED CARBON DIOXIDE CAPTURE AND UTILIZATION

(57) The present invention is related to a method and related device (10) for capturing carbon dioxide and converting the captured carbon dioxide to a chemical compound. In particular, the present invention is related to a method for capturing a carbon dioxide gas by contacting it with a liquid alkaline solution, which reacts with the carbon dioxide and converts it into (bi)carbonate, and including a further processing step to convert the (bi)carbonate to an economically valuable chemical compound.

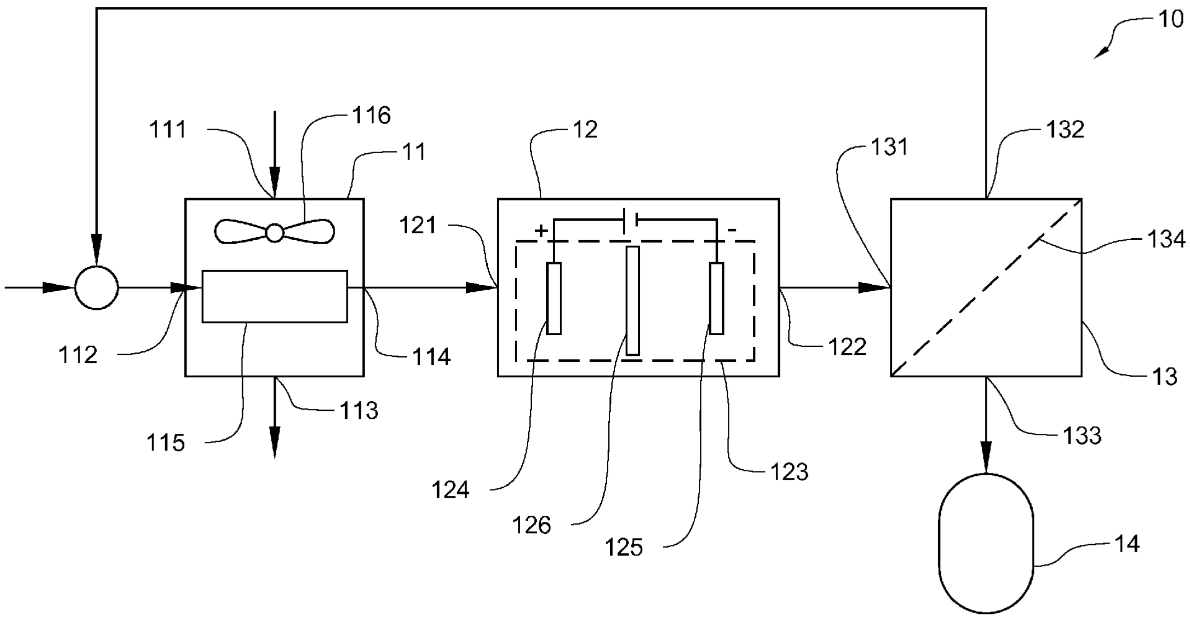


FIG 2

EP 3 673 972 A1

## Description

## Technical field

The present invention is related to a method and device for capturing carbon dioxide and converting the captured carbon dioxide to a chemical compound. In particular, the present invention is related to a method for capturing a carbon dioxide gas by contacting it with a liquid alkaline solution, which reacts with the carbon dioxide and converts it into (bi)carbonate, and including a further processing step to convert the (bi)carbonate to an economically valuable chemical compound.

## Background art

Current direct carbon dioxide capture methods from air can generally be grouped in two categories depending on the capturing technology. A first group is based on solid state capture of the carbon dioxide. A second group is based on a solution-based adsorption of the atmospheric $CO_2$. In both instances the methods simply rely on binding $CO_2$ from the air using a 'sorbent' either a solid or a liquid with subsequent controlled release using either a temperature swing (generally referred to as Temperature Swing Absorption (TSA)) or a vacuum swing (generally referred to as a Vacuum Swing Absorption (VSA)). In case of a temperature swing the adsorbed carbon dioxide is released by heating the adsorbent, whereas in case of a vacuum swing the adsorbed carbon dioxide is released by exposing the adsorbent to a reduced pressure environment (vacuum). TSA and VSA can be combined in these methods, but in each instant carbon dioxide is unmodified extracted from the sorbent material.

WO 2009/155539 describes a method of carbon dioxide capture based on the formation of a carbonate solid and subsequent release of the bound $CO_2$, in this instance by causticization. In a step (a) anhydrous sodium carbonate (solid) is separated from a first aqueous solution formed by reacting carbon dioxide and an aqueous solution of sodium hydroxide. In step (b) the anhydrous sodium carbonate is treated by causticization to generate carbon dioxide and sodium hydroxide. The first aqueous solution of step (a) is formed by scrubbing a gas containing carbon dioxide with an aqueous solution of sodium hydroxide.

EP 3352371 describes a combined heat and power plant for self-sufficient domestic applications. The plant includes a system for producing a hydrocarbon by reducing $CO_2$, comprising the use of a heated electrode. Looking at the exemplified embodiments in this publication, the conversion is always an electro-biocatalysis wherein heated electrodes are associated with at least one enzyme which catalyzes a step in the reduction of $CO_2$ into methanol. Enzymes used in such an electro-biocatalysis process are carboanhydrases, formaldehydedehydrogenases, aldehydehydrogenases or alcoholdehydrogenases.

The foregoing processes are known to have a low productivity in being directed to a direct conversion of $CO_2$ in the gas phase, with only a low solubility of carbon dioxide in water as carrier solvent and hydrogen source. Also, the enzymatic biocatalysts are prone to degradation requiring regular supplementation and regeneration of the electro-biocatalysis.

## Summary of the invention

It is an aim of the present invention to provide methods and devices allowing to capture and convert carbon dioxide more efficiently and/or with higher yield. It is an aim of the present invention to provide such methods and devices allowing not just simply recovering (binding - releasing) $CO_2$ but allowing for capturing the carbon dioxide and for converting it in chemicals with a higher economic value. It is an aim of the present invention to provide such methods and devices which can be integrated easily in building ventilation systems.

According to a first aspect of the invention, there is therefore provided a method as set out in the appended claims. The method comprises contacting a gas comprising carbon dioxide with a liquid alkaline solution comprising an alkali metal hydroxide, wherein the carbon dioxide reacts with the alkali metal hydroxide to form a (bi)carbonate. According to the invention, the method further comprises electrochemically reacting the (bi)carbonate into an organic compound. The organic compound is advantageously liquid or gaseous.

The capacity of alkaline solvent based adsorbents for $CO_2$ is much higher when compared to the solubility of $CO_2$ in water. As a result, methods according to the present invention allow for capturing high amounts of carbon dioxide. According to the present invention, such highly efficient carbon dioxide capture is combined with electrochemical conversion of the captured carbon dioxide into an organic compound, with a non-enzymatic electrochemical reaction, using the (bi)carbonate solution as obtained through carbon dioxide capture.

Depending on the nature of the organic compound, the electrochemical reaction advantageously allows for regenerating the liquid alkaline solution. In an optional separation step, the reaction mixture obtained from the electrochemical reaction is separated into the organic compound and the liquid alkaline solution. The liquid alkaline solution is

advantageously recycled to the step of contacting with carbon dioxide. With the recycling of the liquid alkaline solution, the method (and related device) becomes even more robust and even allows a continuous process of absorption and $CO_2$ conversion, in particular when combined with an in-situ separation of the reaction product from reaction medium in the electrochemical cell.

Methods according to the present invention therefore allow for reducing the cost of carbon dioxide capturing and utilization. Furthermore, obtainable organic compounds such as alcohols, syngas and organic acids can be utilized locally, e.g. for electrical power generation and/or heating.

According to a second aspect of the invention, there is provided a device as set out in the appended claims.

According to a third aspect of the invention, there is provided a ventilation system as set out in the appended claims.

**Brief description of the figures**

Aspects of the invention will now be described in more detail with reference to the appended drawings, wherein same reference numerals illustrate same features and wherein:

Figure 1 represents a flow diagram of a method for capturing and converting carbon dioxide according to aspects of the present invention;
Figure 2 represents a block diagram of a device for capturing and converting carbon dioxide according to aspects of the present invention.

**Description of embodiments**

Referring to Fig. 1, a method 100 of capturing and converting carbon dioxide as described herein comprises a first step 101 of contacting a gas with a liquid alkaline solution. The gas comprises or consists of carbon dioxide, and is advantageously air or an exhaust of an industrial or power plant. The gas is advantageously supplied at or near atmospheric pressure. The liquid alkaline solution is advantageously an aqueous solution comprising an alkali metal hydroxide, e.g. a hydroxide of lithium (Li), sodium (Na), potassium (K), rubidium (Rb), caesium (Cs), or francium (Fr), in particular KOH or NaOH. The alkali metal hydroxides in the liquid alkaline solution are known to react with the carbon dioxide to form a carbonate or a bicarbonate in solution. Example formulas are as follows:

$$CO_2 + 2KOH \rightarrow H_2O + K_2CO_3$$

$$CO_2 + KOH \rightarrow KHCO_3$$

$$KHCO_3 \rightarrow K^+ + HCO_3^-.$$

in which K can be replaced with any other alkali metal element.

The liquid alkaline solution advantageously has a pH between 8 and 14, advantageously between 8 and 13, advantageously between 10 and 12. Hence, in step 101, a (bi)carbonate solution is obtained.

In step 101 gas containing carbon dioxide can be contacted by scrubbing with the liquid alkaline solution to react the carbon dioxide to form solution comprising (bi)carbonates. Scrubbing may refer to, for example, any method of removing carbon dioxide from gas. Scrubbing can be carried out in a contactor.

Advantageously, in steps 101 according to the present invention, no precipitation of (bi)carbonate takes place. The (bi)carbonate ions are therefore advantageously comprised in the liquid phase.

According to an aspect, the carbon dioxide is not released from the (bi)carbonate solution as a gas phase, but the carbonate or bicarbonate is made to electrochemically react in step 102. The electrochemical reaction is advantageously carried out in an electrochemical reactor, including at least one electrochemical cell. Due to an electric potential between an anode and a cathode, the carbonate and/or bicarbonate ions dissolved in the (bi)carbonate solution react with water into an organic compound. Various electrochemical reactions can be contemplated which may be assisted by suitable catalysts. Specific examples of suitable catalysts are the noble metals ruthenium (Ru), rhodium (Rh), palladium (Pd), silver (Ag), osmium (Os), iridium (Ir), platinum (Pt), and gold (Au). Other specific examples of suitable catalysts can be copper (Cu) or Tin (Sn). Such catalysts are advantageously immobilised on or in the bulk of the electrode, in particular the cathode.

The electrochemical reaction is advantageously not assisted or catalysed by enzymes, and such enzymes are

advantageously not used for converting the dissolved (bi)carbonate into a chemical compound of interest according to present aspects.

The (bi)carbonate solution obtained in step 101 can be directly used in the electrochemical reaction of step 102. Alternatively, the pH of the (bi)carbonate solution can be suitably adapted, e.g. to a pH between 6 and 10, advantageously between 6.5 and 8.5. This can be obtained through addition of a buffering solution e.g. a phosphate solution, advantageously allowing to obtain a pH between 6 and 7.5. Alternatively the (bi)carbonate solution can be saturated with carbon dioxide prior to subjecting the (bi)carbonate solution to the electrochemical reaction in step 102 (pH advantageously between 6.5 and 8).

Through the electrochemical reaction, the carbonate and/or bicarbonate is converted to an organic compound, advantageously through a reduction reaction of the carbonate and/or bicarbonate ion. The reduction reaction advantageously allows to obtain organic compounds such as though not limited to an alcohol, a hydrocarbon, synthesis gas (syngas) or an organic (carboxylic) acid as a reaction product. Alcohols, hydrocarbons and/or syngas are preferred since they lead to no net $OH^-$ consumption allowing for regenerating the liquid alkaline solution and recovering it by separation from the organic compound. The recovered liquid alkaline solution can be recycled to step 101.

The alcohol is advantageously methanol. For this particular case, example reactions taking place in the electrochemical cell can be written out as follows. At the anode side:

$$3H_2O \rightarrow 6H^+ + 6e^- + 3/2\ O_2,$$

at the cathode side:

$$CO_2 + 5H_2O + 6e^- \rightarrow CH_3OH + 6OH^-$$

$$HCO_3^- + 5H_2O + 6e^- \rightarrow CH_3OH + 7OH^-$$

$$CO_3^{2-} + 6H_2O + 6e^- \rightarrow CH_3OH + 8OH^-$$

The resulting net reactions of the electrochemical cell can hence be written down as:

$$CO_2 + 2H_2O \rightarrow CH_3OH + 3/2\ O_2$$

$$HCO_3^- + 2H_2O \rightarrow CH_3OH + 3/2\ O_2 + OH^-$$

$$CO_3^{2-} + 3H_2O \rightarrow CH_3OH + 3/2\ O_2 + 2OH^-$$

For methanol, both the synthesis of the carbonate or of the bicarbonate are reactions with no net consumption of $OH^-$ ions, allowing for regeneration of the liquid alkaline solution:

<u>via bicarbonate (1 mol $OH^-$ consumed, 1 mol generated)</u>

$$CO_2 + OH^- \rightarrow HCO_3^-$$

$$HCO_3^- + 2\ H_2O \rightarrow CH_3OH + 3/2\ O_2 + \underline{OH^-}$$

<u>via carbonate (2 mol $OH^-$ consumed, 2 mol generated)</u>

$$CO_2 + OH^- \rightarrow HCO_3^-$$

$$HCO_3^- + OH^- \leftrightarrow CO_3^{2-} + H_2O$$

$$CO_3^{2-} + 3\ H_2O \rightarrow CH_3OH + 3/2\ O_2 + \underline{2\ OH^-}$$

Other electrochemical reactions useful in the method of the invention are outlined below.

- Syngas:

via bicarbonate (1 mol $OH^-$ consumed, 1 mol generated)

$$CO_2 + OH^- \rightarrow HCO_3^-$$

$$HCO_3^- + H_2O \rightarrow CO + O_2 + H_2 + OH^-$$

via carbonate (2 mol $OH^-$ consumed, 2 mol generated)

$$CO_2 + OH^- \rightarrow HCO_3^-$$

$$HCO_3^- + OH^- \leftrightarrow CO_3^{2-} + H_2O$$

$$CO_3^{2-} + 2\ H_2O \rightarrow CO + O_2 + H_2 + 2\ OH^-$$

- Ethylene

via bicarbonate (2 mol $OH^-$ consumed, 2 mol generated)

$$CO_2 + OH^- \rightarrow HCO_3^-$$

$$2\ HCO_3^- + 2\ H_2O \rightarrow C_2H_4 + 3\ O_2 + 2\ OH^-$$

via carbonate (4 mol $OH^-$ consumed, 4 mol generated)

$$CO_2 + OH^- \rightarrow HCO_3^-$$

$$HCO_3^- + OH^- \leftrightarrow CO_3^{2-} + H_2O$$

$$2\ CO_3^{2-} + 4\ H_2O \rightarrow C_2H_4 + 3\ O_2 + 4\ OH^-$$

- Formic acid

via bicarbonate (1 mol $OH^-$ consumed, no generated)

$$CO_2 + OH^- \rightarrow HCO_3^-$$

$$HCO_3^- \rightarrow CHOO^- + 3/2\ O_2$$

via carbonate (2 mol $OH^-$ consumed, 1 mol generated)

$$CO_2 + OH^- \rightarrow HCO_3^-$$

$$HCO_3^- + OH^- \leftrightarrow CO_3^{2-} + H_2O$$

$$CO_3^{2-} + H_2O \rightarrow CHOO^- + OH^-$$

In a step 103 the organic compound obtained in step 102 from the electrochemical reaction of the (bi)carbonate ions is advantageously separated from the reaction mixture to advantageously obtain a regenerated liquid alkaline solution 104 and the organic compound 105. The regenerated solution 104 may have regenerated hydroxyl ions so as to be fit for recycling in step 101. This advantageously allows for a continuous operation of present methods for carbon dioxide capture and conversion. The organic compound 105 may further be used in an economical way, e.g. as resource in industrial processes, or for energy production.

It will be convenient to note that the organic compound can be gaseous. Aspects of the present invention therefore contemplate the separation of a gaseous end product (e.g. the organic compound) from a liquid reaction mixture. The present invention is therefore not limited to the separation of a dissolved, dispersed or precipitated conversion product from the liquid reaction medium.

Referring to Fig. 2, a device 10 or apparatus for carrying out the method 100 as described above comprises a first unit 11, a second unit 12 and optionally a third unit 13. The first unit 11 is configured to carry out method step 101 and comprises a first inlet 111 for the carbon dioxide containing gas, a second inlet 112 for the liquid alkaline solution and a contact system 115 in which the carbon dioxide containing gas and the liquid alkaline solution are brought in contact.

Contact system 115 can be any system allowing for bringing the carbon dioxide containing gas and the liquid alkaline solution in contact so that carbon dioxide from the gas can be captured in the liquid alkaline solution as described above. In particular, contact system 115 is a gas/liquid contactor, advantageously a gas/liquid membrane contactor. Alternatively, contact system 115 may provide in spraying the liquid alkaline solution in the gas stream.

Useful gas/liquid phase contactors, are those that realize a contact between the liquid alkaline solution and the carbon dioxide containing gas. A gas-liquid contactor, such as described in WO 2010/022339 can comprise a possibly slab-shaped porous packing. The slab comprises oppositely arranged dominant faces, the opposed dominant faces being at least partially gas penetrable to allow gas to flow through the packing. A liquid inlet is oriented to direct the liquid alkaline solution into the packing to flow through the slab. The slab is disposed in a wind flow that has a non-zero incident angle with one of the opposed dominant faces. The packing can be random or structured. Random packing can comprise small shapes formed out of a suitable material and dumped into the space where contact between liquid and gas is to occur. A structured packing is any packing which is designed to be fitted into an area in a systematic and planned manner that results in a specific flow pattern for both gas and liquid. Alternative examples of gas/liquid phase contactors are planar membrane elements as described in WO 2006/015461 or WO 2013/113928, which can be stacked as flat parallel sheets in existing or dedicated fan systems. In these planar membrane elements, adjacent fluid compartments are separated by semi-permeable membranes allowing the carbon dioxide containing gas to contact the liquid alkaline solution, which can be diffusion-controlled. Yet alternative examples can be polymer-based tubular/capillary membrane contactors, as known in the art.

The carbon dioxide containing gas is exhausted from the first unit through outlet 113. A fan 116 may provide for drawing a desired flux of the gas through the first unit, from inlet 111 to outlet 113. The first unit therefore advantageously allows for continuous operation, advantageously at or near atmospheric pressure, and advantageously at or near ambient temperature. The first unit 111 can be part of a ventilation system of e.g. a building or industrial plant, with air being used as the carbon dioxide containing gas. The air can be drawn from e.g. an interior space of the building by fan 116 to inlet 111. The outlet 113 can be connected to the building interior, or to the exterior.

The liquid alkaline solution reacts with the carbon dioxide in contact system 115 to form a (bi)carbonate solution which is discharged at outlet 114. Outlet 114 is coupled to the inlet 121 of the second unit 12. The (bi)carbonate solution can be directly supplied to inlet 121 without modification. Alternatively, the (bi)carbonate solution can be buffered, e.g. with a phosphate, or saturated with carbon dioxide, between outlet 114 and inlet 121, e.g. to adjust pH and/or add required compounds for steering the electrochemical reactions in the second unit 12. Appropriate means can be provided for buffering and/or saturating, between outlet 114 and inlet 121.

The second unit 12 consists of, or comprises an electrochemical reactor, comprising at least one electrochemical cell 123 comprising at least one anode 124 and at least one cathode 125. An ion exchange membrane 126 such as a proton exchange membrane advantageously separates the anode 124 from the cathode 125. An electrical potential is maintained between the anode 124 and the cathode 125. The (bi)carbonate solution is drawn through the electrochemical cell 123 e.g. through one or more pumps, and thereby electrochemical reactions take place which convert the (bi)carbonate ions into an organic compound as indicated above.

The electrode, in particular the cathode, can comprise a catalyst as indicated above. The catalyst can be provided as a coating on the electrode, or be provided in the bulk of the electrode.

The reaction mixture obtained through the electrochemical reaction is discharged from the second unit at outlet 122. Advantageously, outlet 122 is coupled to the inlet 131 of the third unit 13 which is formed of a separator. Any suitable separator system can be used as third unit 13. Advantageously, the third unit is a membrane separator, comprising a separation membrane 134. The separation membrane 134 is advantageously configured to retain the alkali metal ions and hydroxides as a retentate and to permeate the organic compound through the separation membrane 134, or vice versa. The organic compound (e.g., as the permeate) can be discharged at (permeate) outlet 133 and optionally collected in a vessel 14. The remainder of the reaction mixture advantageously comprises, or consists of, the liquid alkaline solution, which is depleted from the organic compound. The liquid alkaline solution can be recovered (e.g., as the retentate) and is advantageously recycled to the inlet 112 of the first unit 11. Such a separator system hence allows for recovering the organic compound and optionally the liquid alkaline solution in-situ.

Suitable examples for the third unit 13 are a pervaporation unit, comprising a pervaporation membrane in particular useful when the organic compound is a volatile organic compound like alcohols (methanol). Pervaporation is attractive because of its high selectivity and low energy requirement. In general terms, a liquid mixture is placed on one side of a dense and non-porous membrane, a vacuum is applied to the other side to supply a driving force, and components of the mixture discharged from the electrochemical reactor differentially permeate through the membrane and evaporate into the vacuum. Evaporated permeate is carried by either sweep gas or by a pulling vacuum, and then collected by a condenser at the downstream side. Examples of pervaporation membranes include cross-linked poly(vinyl alcohol) (PVA) membranes, chitosan membranes, and Polydimethylsiloxane (PDMS)/Ceramic Composite Membranes.

Alternatively, the third unit can be a direct evaporation system in case of syngas (CO, $H_2$) production. Yet alternatively, Reverse Electro Enhanced Dialysis (REED) systems can be used, in particular for the separation of organic acids.

## Claims

1. Method (100) of capturing carbon dioxide, comprising:

   contacting (101) a gas comprising carbon dioxide with a liquid alkaline solution comprising an alkali metal hydroxide, wherein the carbon dioxide reacts with the alkali metal hydroxide to form a (bi)carbonate, thereby obtaining a (bi)carbonate solution,
   **characterised in that** the method comprises electrochemically converting (102) the (bi)carbonate into an organic compound.

2. Method of claim 1, wherein electrochemically converting the (bi)carbonate comprises a non-enzymatic electrochemical conversion of the (bi)carbonate into the organic compound.

3. Method of claim 1 or 2, wherein electrochemically converting the (bi)carbonate is assisted by a catalyst selected from the group consisting of ruthenium (Ru), rhodium (Rh), palladium (Pd), silver (Ag), osmium (Os), iridium (Ir), platinum (Pt), copper (Cu) and gold (Au).

4. Method of any one of the preceding claims, wherein electrochemically converting the (bi)carbonate comprises supplying the (bi)carbonate solution to an electrochemical cell (123).

5. Method of any one of the preceding claims, wherein the liquid alkaline solution is an aqueous solution of the alkali-metal hydroxide.

6. Method of any one of the preceding claims, wherein the liquid alkaline solution has a pH between 8 and 14 when brought in contact with the gas.

7. Method of any one of the preceding claims, wherein electrochemically converting the (bi)carbonate comprises converting the (bi)carbonate into the organic compound and hydroxide, wherein preferably an amount of hydroxide is converted that is equimolar to an amount of hydroxide used to form the (bi)carbonate in the contacting step (101).

8. Method of claim 7, wherein the organic compound and the hydroxide obtained in the electrochemical reacting step (102) are separated (103) obtaining a liquid solution, preferably corresponding to the liquid alkaline solution, and

the organic compound, wherein the liquid solution is recycled in the step (101) of contacting the gas with the liquid alkaline solution.

**9.** Method of any one of the preceding claims, wherein the organic compound is an alcohol, a hydrocarbon, syngas or an organic acid.

**10.** Device (10) for capturing carbon dioxide, comprising:

a first unit (11) comprising a first inlet (111) for a gas comprising carbon dioxide, a second inlet (112) for a liquid alkaline solution comprising an alkali metal hydroxide and a first outlet (114), wherein the first unit comprises a contact system (115) configured to bring the gas in contact with the liquid alkaline solution such that the carbon dioxide reacts with the alkali-metal hydroxide to form a (bi)carbonate, the contact system (115) being coupled to the first outlet (114),
**characterised in that** the device comprises a second unit (12) comprising an electrochemical cell (123) being coupled to the first outlet (114), wherein the electrochemical cell is configured to electrochemically convert the (bi)carbonate into an organic compound.

**11.** Device of claim 10, wherein the second unit comprises a second outlet (122), the device comprising a third unit (13) coupled to the second outlet (122) and configured to separate a reaction mixture obtained in the electrochemical cell (123) into a regenerated liquid alkaline solution and the organic compound.

**12.** Device of claim 11, wherein the third unit (13) comprises an outlet (132) for the regenerated liquid alkaline solution coupled to the second inlet (112).

**13.** Device of any one of the claims 10 to 12, wherein the contact system (115) comprises a gas/liquid membrane contactor.

**14.** Device of any one of the claims 10 to 13, wherein the electrochemical cell (123) comprises an electrode (124, 125) comprising a metal selected from the group consisting of ruthenium (Ru), rhodium (Rh), palladium (Pd), silver (Ag), osmium (Os), iridium (Ir), platinum (Pt), copper (Cu) and gold (Au).

**15.** Ventilation system, comprising the device (10) of any one of the claims 10 to 14, wherein the first inlet is coupled to an air intake duct of the ventilation system for capturing air as the carbon dioxide containing gas.

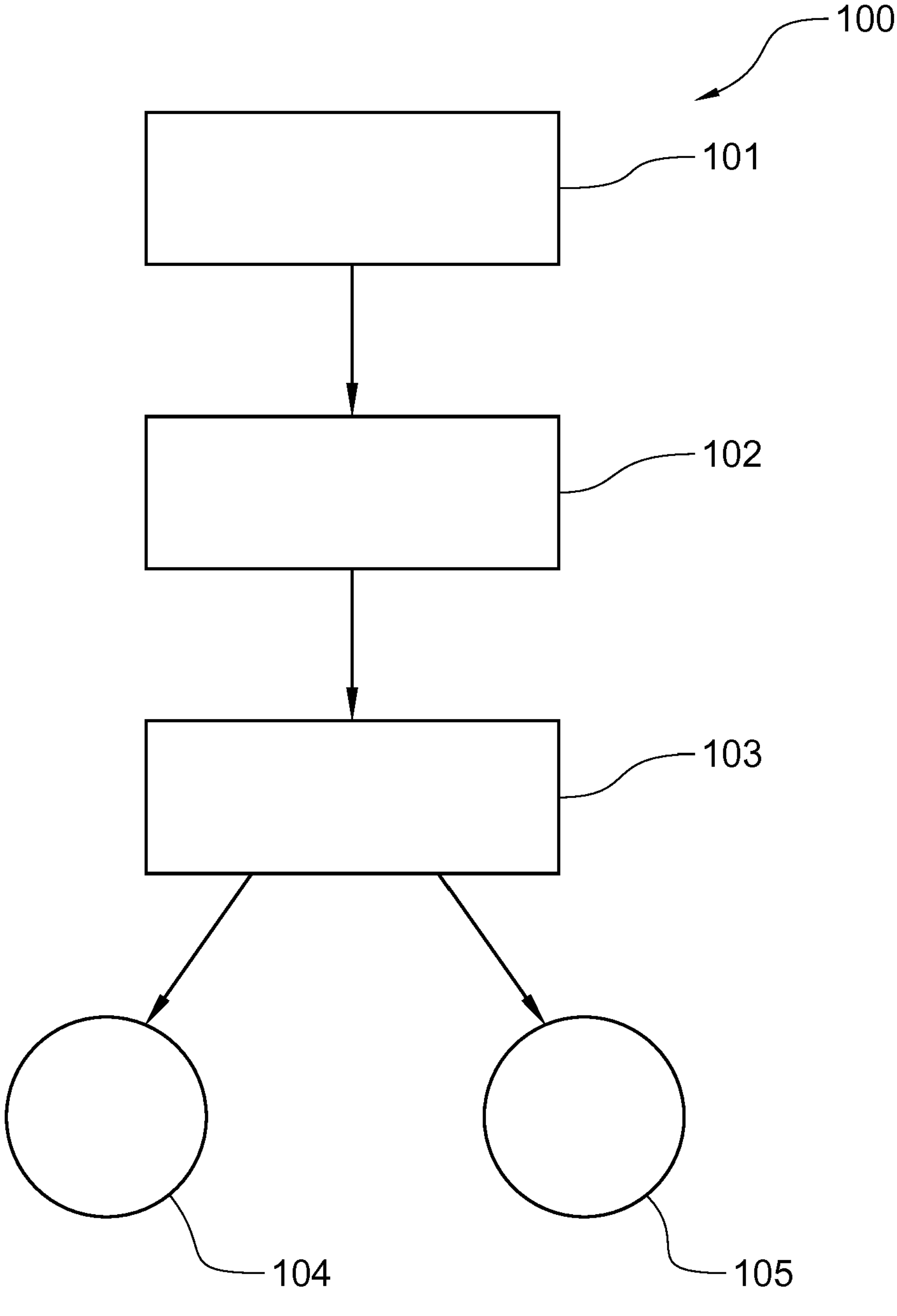


FIG 1

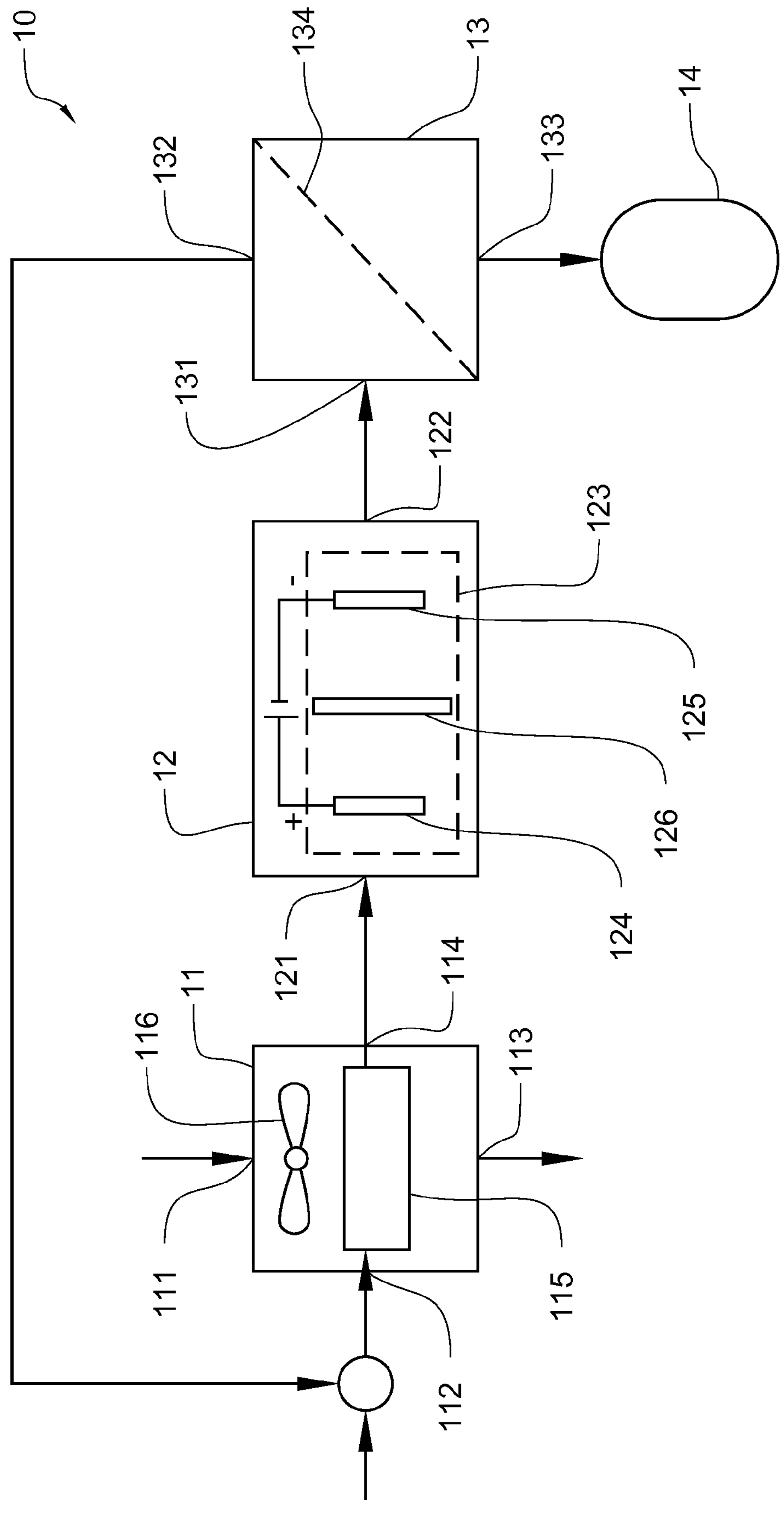
10
13
134
14
132
133
131
122
123
125
126
12
124
121
114
11
116
113
111
115
112
+
-

FIG 2

Europäisches Patentamt
European Patent Office
Office européen des brevets

# EUROPEAN SEARCH REPORT

Application Number
EP 18 24 8264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 2017/112900 A1 (AVANTIUM HOLDING B V [NL]) 29 June 2017 (2017-06-29)<br>* paragraphs [0008], [0115] - [0121], [0141]; figures 1,5A-14 *<br>----- | 1-15<br><br>8,11 | INV.<br>B01D53/14<br>B01D53/73<br>B01D53/96 |
| X<br><br><br>Y | WO 2016/064440 A1 (DIOXIDE MATERIALS [US]; MASEL RICH [US] ET AL.)<br>28 April 2016 (2016-04-28)<br>* paragraphs [0004], [0051] - [0056], [0083]; table 1 *<br>----- | 1-7,9,<br>10,12-15<br><br>8,11 | |
| X | Arun S. Agarwal ET AL: "Conversion of CO2 to Value-Added Chemicals: Opportunities and Challenges"<br>In: "Handbook of Climate Change Mitigation and Adaptation",<br>1 January 2015 (2015-01-01), Springer New York, New York, NY, XP055511700,<br>ISBN: 978-1-4614-6431-0<br>pages 1-40, DOI: 10.1007/978-1-4614-6431-0_86-1,<br>* pages 10-22,32; figures 1,4; table 3 *<br>----- | 1-15 | TECHNICAL FIELDS SEARCHED (IPC)<br>B01D |
| A | TAO MA ET AL: "Heterogeneous electrochemical COreduction using nonmetallic carbon-based catalysts: current status and future challenges",<br>NANOTECHNOLOGY, IOP, BRISTOL, GB,<br>vol. 28, no. 47,<br>3 November 2017 (2017-11-03), page 472001, XP020321528,<br>ISSN: 0957-4484, DOI: 10.1088/1361-6528/AA8F6F<br>[retrieved on 2017-11-03]<br>* pages 3,6-15; figure 1 *<br>----- | 1-15 | |

The present search report has been drawn up for all claims

2

| Place of search | Date of completion of the search | Examiner |
|---|---|---|
| Munich | 3 July 2019 | Bergt, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 24 8264

This annex lists the patent family members relating to the patent documents cited in the above-mentioned European search report. The members are as contained in the European Patent Office EDP file on
The European Patent Office is in no way liable for these particulars which are merely given for the purpose of information.

03-07-2019

| Patent document cited in search report | Publication date | Patent family member(s) | Publication date |
|---|---|---|---|
| WO 2017112900 A1 | 29-06-2017 | EP 3427320 A1 | 16-01-2019 |
| | | US 2019017183 A1 | 17-01-2019 |
| | | WO 2017112900 A1 | 29-06-2017 |
| WO 2016064440 A1 | 28-04-2016 | AU 2015337093 A1 | 18-08-2016 |
| | | AU 2018204762 A1 | 19-07-2018 |
| | | CA 2941423 A1 | 28-04-2016 |
| | | CN 106170339 A | 30-11-2016 |
| | | EP 3209816 A1 | 30-08-2017 |
| | | JP 6463777 B2 | 06-02-2019 |
| | | JP 2017526804 A | 14-09-2017 |
| | | JP 2018204021 A | 27-12-2018 |
| | | KR 20160105909 A | 07-09-2016 |
| | | KR 20170140423 A | 20-12-2017 |
| | | US 2016251766 A1 | 01-09-2016 |
| | | WO 2016064440 A1 | 28-04-2016 |
| | | WO 2016064447 A1 | 28-04-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009155539 A
- EP 3352371 A
- WO 2010022339 A
- WO 2006015461 A
- WO 2013113928 A